# DEMANDE DE BREVET EUROPEEN

(11) **EP 1 665 964 A1**
(43) Date de publication de la demande: **07.06.2006**
(21) Numéro de dépôt: 05356204.7
(22) Date de dépôt: 22.11.2005
(51) Int. Cl.: A47J 19/02

(54) **Couvercle de pressage pour pressefruits**

(30) Priorité: 03.12.2004 FR 0412834
(71) Demandeur: SEB SA, 69130 Ecully (FR)
(72) Inventeur: Perrier, Matthieu, 65000 Tarbes (FR); Rouches, Alexandre, 65310 Horgues (FR)
(74) Mandataire: Kiehl, Hubert

(57) **Abrégé**

- L'invention concerne un couvercle de presse-fruits, comportant une partie centrale (20) formant un dôme (21) et une partie périphérique annulaire (22) s'étendant autour de la base du dôme (21), le dôme (21) étant réalisé en matériau souple.
- Conformément à l'invention, la partie périphérique annulaire (22) présente un bord annulaire (26) relevé.

## Description

La présente invention concerne le domaine technique des presse-fruits à cône de pressage. Le mouvement de rotation du cône de pressage par rapport à un demi fruit permet l'extraction du jus.

Les presse-fruits électriques du type précité comportent usuellement un cône de pressage entraîné en rotation. Toutefois le cône de pressage peut également être fixe, le demi-fruit étant alors entraîné en rotation manuellement ou non.

Les presse-fruits sont habituellement utilisés avec des fruits comportant une peau résistante, tels que les agrumes.

L'utilisateur voulant extraire du jus d'un fruit présentant une peau moins résistante, tel que par exemple la tomate, constate que la peau se détériore au cours du pressage. De plus, le rendement de l'extraction de jus reste peu élevé, du fait de la présence de pulpe.

Un but de la présente invention est de proposer un accessoire pour un presse-fruits à cône de pressage, qui améliore l'utilisation du presse-fruits.

Un autre but de la présente invention est de faciliter l'obtention de jus à partir de fruits présentant une peau peu résistante.

Un autre but de la présente invention est de faciliter l'obtention de jus à partir de fruits produisant une proportion élevée de pulpe.

Un autre but de la présente invention est de faciliter l'obtention de jus de tomates.

Ces buts sont atteints avec un couvercle de presse-fruits, comportant une partie centrale formant un dôme et une partie périphérique annulaire s'étendant autour de la base du dôme, le dôme étant réalisé en matériau souple, du fait que la partie périphérique annulaire présente un bord annulaire relevé. En d'autres termes, la paroi du dôme est déformable élastiquement. L'utilisateur peut ainsi maintenir avec le dôme du couvercle un demi-fruit à peau mince et/ou fragile, tel qu'une tomate, et obtenir du jus avec un presse-fruits à cône de pressage sans se salir la main. La partie périphérique annulaire s'étendant autour de la base du dôme permet de limiter la déformation de la base du dôme, ce qui contribue à limiter les déformations exercées par l'utilisateur. Le bord annulaire relevé de la partie périphérique annulaire permet de presser la pulpe recueillie dans un réceptacle présentant également un bord périphérique relevé, de protéger les doigts de l'utilisateur, et de rigidifier la base du dôme.

Avantageusement, le dôme est réalisé en matériau transparent ou translucide, pour permettre l'observation du demi-fruit utilisé.

Avantageusement encore, le dôme présente une forme sensiblement hémisphérique, cette forme étant bien adaptée à l'utilisation de demi-tomates.

Avantageusement encore, une dépression est formée au sommet du dôme. Cette disposition permet de faciliter le centrage de la partie supérieure de la demi-tomate comportant la zone d'attache à la tige de la plante, cette zone d'attache formant aussi une dépression.

Avantageusement encore, la face extérieure du dôme présente des conformations en relief. Cette disposition permet un meilleur accrochage de la main de l'utilisateur sans trop affecter la souplesse du dôme.

Avantageusement encore la partie périphérique annulaire est réalisée en matériau transparent ou translucide. Cette disposition permet un contrôle visuel du jus et de la pulpe extrait du demi-fruit.

Avantageusement encore la partie périphérique annulaire est plus rigide que la partie centrale. Cette disposition permet de faciliter le pressage de la pulpe extraite du demi-fruit, l'utilisateur tenant le couvercle par le dôme.

Les buts de l'invention sont également atteints avec un presse-fruits comportant un cône de pressage agencé au-dessus d'un réceptacle, et un couvercle selon l'une au moins des dispositions précédentes, dans lequel le dôme peut être déformé latéralement de manière élastique en deux points opposés jusqu'à atteindre une surface de pressage du cône de pressage lorsque le couvercle coiffe le cône de pressage. Ainsi grâce à la souplesse du dôme l'utilisateur peut maintenir le demi-fruit en utilisant un effet de pince.

Avantageusement alors la partie périphérique annulaire du couvercle vient en contact avec le fond du réceptacle lorsque le couvercle coiffe le cône de pressage. Cette disposition permet d'améliorer l'extraction du jus à partir de la pulpe.

Avantageusement alors, le réceptacle présente un bord périphérique relevé. Cette disposition permet d'améliorer encore davantage l'extraction du jus à partir de la pulpe.

Avantageusement encore, le cône de pressage comporte une surface de pressage présentant des conformations en relief et le dôme ménage un jeu compris entre 2 et 4 mm avec les conformations lorsque le couvercle coiffant le cône de pressage vient en contact au moins partiellement avec le réceptacle. Cette disposition permet d'éviter de déchirer la peau des demi-tomates, ce qui contribue à améliorer l'éjection du reste du demi-fruit après l'opération de pressage.

Avantageusement encore, le réceptacle forme un tamis. Cette disposition permet d'améliorer encore l'extraction du jus à partir de la pulpe.

Avantageusement encore, le cône de pressage comporte une partie supérieure comprenant au moins une dent s'élevant en périphérie d'une zone centrale prolongée par une paroi latérale de la surface de pressage, et une dépression est formée au sommet du dôme. Cette disposition permet d'utiliser la zone centrale comme une surface d'appui. L'utilisateur peut exercer un appui sur le sommet d'un fruit à peau fragile, tel que la tomate, en limitant les risques de déchirure de la peau. De plus, le jus recueilli sur la zone centrale peut s'écouler de manière plus aisée.

Avantageusement encore la partie supérieure de la surface de pressage comprend plusieurs dents s'élevant en périphérie de la zone centrale. Cette disposition améliore encore la stabilité du demi-fruit lors de l'opération de pressage.

Avantageusement alors un espace est ménagé entre deux dents adjacentes. En d'autres termes deux dents adjacentes sont espacées, et non accolées. Cette disposition facilite l'écoulement du jus recueilli dans la zone centrale.

Selon une forme de réalisation préférée, le presse-fruits comporte un moteur entraînant en rotation le cône de pressage.

L'invention sera mieux comprise à l'étude d'un exemple de réalisation, pris à titre nullement limitatif, illustré dans les figures annexées, dans lesquelles :
- la figure 1 est une vue d'un exemple de réalisation d'un presse-fruits comportant un couvercle selon l'invention,
- la figure 2 est une vue en coupe du couvercle du presse-fruits illustré à la figure 1,
- la figure 3 est une vue de côté du cône de pressage du presse-fruits illustré à la figure 1,
- la figure 4 est une vue de dessus du cône de pressage illustré à la figure 3,
- la figure 5 est une vue en perspective de dessous du tamis du presse-fruits illustré à la figure 1, formant un support de découpe pour fruits à jus,
- la figure 6 est une vue de côté du tamis illustré à la figure 5,
- la figure 7 est une vue en perspective de dessus du tamis illustré aux figures 5 et 6.

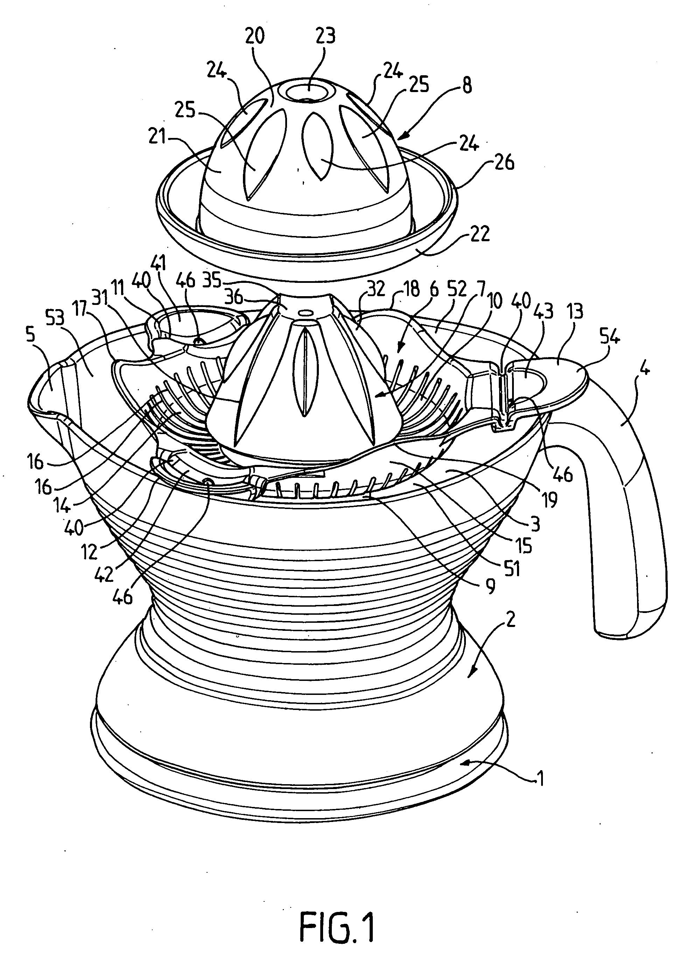

La figure 1 montre un presse-fruits électrique comportant une base 1, un élément de collecte de jus 2 formant un récipient 3 muni d'une poignée 4 et d'un bec verseur 5, un élément de collecte de pulpe 6, un cône de pressage 7 et un couvercle de pressage 8.

L'élément de collecte de jus 2 est avantageusement amovible de la base 1. L'élément de collecte de pulpe 6 est disposé sur l'élément de collecte de jus 2. Plus particulièrement, l'élément de collecte de pulpe 6 repose sur une cheminée 9 de l'élément de collecte de jus 2.

L'élément de collecte de pulpe 6 forme un réceptacle 10. Le réceptacle 10 présente une forme annulaire. Trois bras 11, 12, 13 issus du réceptacle 10 sont prévus pour reposer sur l'élément de collecte de jus 2. Le bras 13 agencé au-dessus de la poignée 4 présente une languette externe 54.

L'élément de collecte de pulpe 6 comporte un tamis 14. Le réceptacle 10 forme le tamis 14. Le réceptacle 10 présente un bord périphérique 15 relevé. A cet effet une série de fentes 16 est agencée dans le fond et la paroi latérale périphérique du réceptacle 10. Le bord périphérique 15 présente trois parties surélevées 19, 18, 17 agencées chacune à l'opposé d'un des bras 11, 12, 13.

Le cône de pressage 7 est agencé au-dessus du réceptacle 10. Le cône de pressage 7 est entraîné en rotation au moyen d'un moteur, non représenté aux figures, agencé dans la base 1 du presse-fruits. Le cône de pressage 7 est avantageusement entraîné en rotation par un arbre, non représenté aux figures, traversant la cheminée 9.

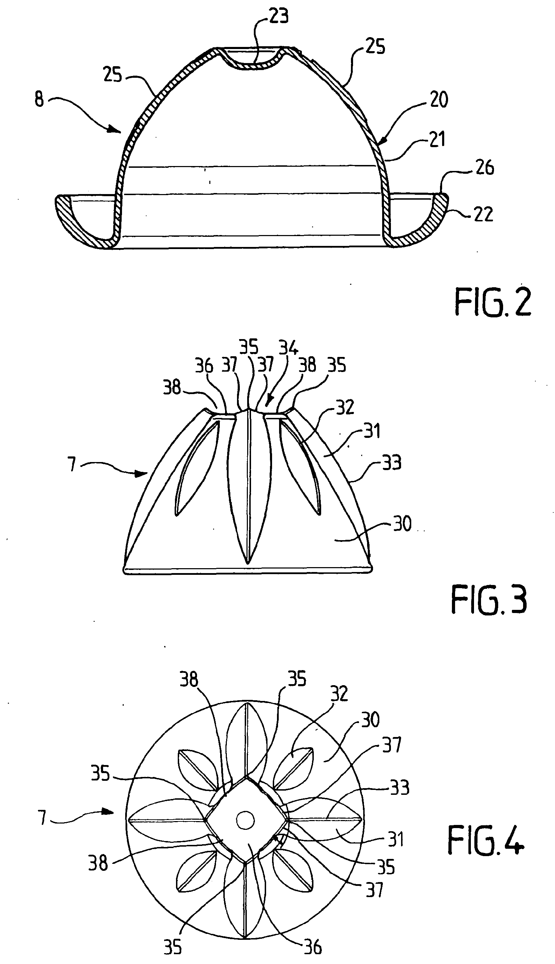

Tel que montré aux figures 1 et 2, le couvercle 8 comporte une partie centrale 20 formant un dôme 21 et une partie périphérique annulaire 22 s'étendant autour de la base du dôme 21.

Le dôme 21 présente une forme sensiblement hémisphérique. Une dépression 23 est formée au sommet du dôme 21. La face extérieure du dôme 21 présente des conformations 24, 25 en relief.

Le dôme 21 est réalisé en matériau souple. La paroi latérale du dôme 21 est déformable élastiquement. Le dôme 21 est avantageusement réalisé en matériau transparent ou translucide, par exemple en silicone, ou encore en élastomère voire en copolymère tel qu'un copolymère de polypropylène.

La partie périphérique annulaire 22 est de préférence plus rigide que la partie centrale 20. Plus particulièrement alors, la partie périphérique annulaire 22 est plus rigide que la paroi latérale de la partie centrale 20 s'étendant autour de la dépression 23. La partie périphérique annulaire 22 est avantageusement aussi réalisée en matériau transparent ou translucide.

La partie périphérique annulaire 22 présente un bord annulaire 26 relevé. La partie périphérique annulaire 22 est prévue pour s'insérer en partie dans le réceptacle 10.

Le couvercle 8 peut être réalisé en une seule pièce, l'épaisseur de la paroi de la partie périphérique annulaire 22 étant supérieure à l'épaisseur de la paroi du dôme 21, tel que représenté à la figure 2.

Tel que montré aux figures 1, 3 et 4, le cône de pressage 7 comporte une surface de pressage 30 présentant des conformations 31, 32 en relief. La surface de pressage 30 présente une partie supérieure 34 comprenant des dents 35 s'élevant en périphérie d'une zone centrale 36. La zone centrale 36 est avantageusement concave.

Le dôme 21 peut être déformé latéralement de manière élastique en deux points opposés jusqu'à atteindre la surface de pressage 30 du cône de pressage 7 lorsque le couvercle 8 coiffe le cône de pressage 7.

La partie supérieure 34 de la surface de pressage 30 présente avantageusement un diamètre compris entre 10 mm et 35 mm, et de préférence un diamètre compris entre 22 mm et 27 mm. La partie supérieure 34 présente avantageusement un diamètre compris entre 15 et 20 % du diamètre de la surface de pressage 30.

Plus particulièrement, les conformations 31 s'étendent de la base du cône de pressage 7 au sommet du cône de pressage 7, et les conformations 32 sont issues de la surface de pressage 30 à distance du sommet et de la base du cône de pressage 7. Les conformations 31, 32 sont agencées de manière alternée sur la surface de pressage 30.

Chacune des conformations 31 est avantageusement formée par une nervure 33. Le sommet de chaque nervure 33 est coupé et forme l'une des dents 35. Ainsi les nervures 33 s'étendent jusqu'aux dents 35. Les nervures 33 présentent une section triangulaire. Les nervures 33 comportent deux faces latérales présentant un angle au sommet supérieur à 90°. La surface de raccordement entre les deux faces latérales est arrondie. Les nervures 33 s'étendent selon une direction radiale sur la surface de pressage 30.

Les dents 35 présentent avantageusement au moins une arête 37 formant un angle par rapport au diamètre du cône de pressage 7 passant par le sommet de ladite dent 35. Tel que montré à la figure 4, les dents 35 présentent deux arêtes 37. Les arêtes 37 sont agencées en périphérie de la zone centrale 36. Les dents 35 s'élèvent de préférence d'au moins 3 mm par rapport à la zone centrale 36.

Tel que bien visible sur la figure 3, un espace 38 est ménagé entre deux dents 35 adjacentes. La zone centrale 36 est prolongée par une paroi latérale de la surface de pressage 30.

Tel que montré aux figures 1, 5, 6 et 7, l'élément de collecte de pulpe 6 forme un support de découpe pour fruit à jus, prévu pour être agencé au-dessus de l'élément de collecte de jus 2.

A cet effet l'élément de collecte de pulpe 6 comporte des zones de réception 41, 42, 43 du fruit à découper. Les zones de réception 41, 42, 43 sont avantageusement concaves, tel que mieux visible aux figures 1 et 7. Les zones de réception 41, 42, 43 sont distinctes du réceptacle 10. Chacune des zones de réception 41, 42, 43 est traversée par une rainure 40.

Chaque rainure 40 présente une sortie d'écoulement 44. Plus particulièrement, les rainures 40 présentent un fond 45 incliné vers la sortie d'écoulement 44. Tel que mieux visible à la figure 7, chacune des sorties d'écoulement 44 est formée par un orifice 46. Les rainures 40 comportent deux extrémités débouchantes 47 permettant de faciliter la découpe du fruit en entier. Les rainures 40 sont droites.

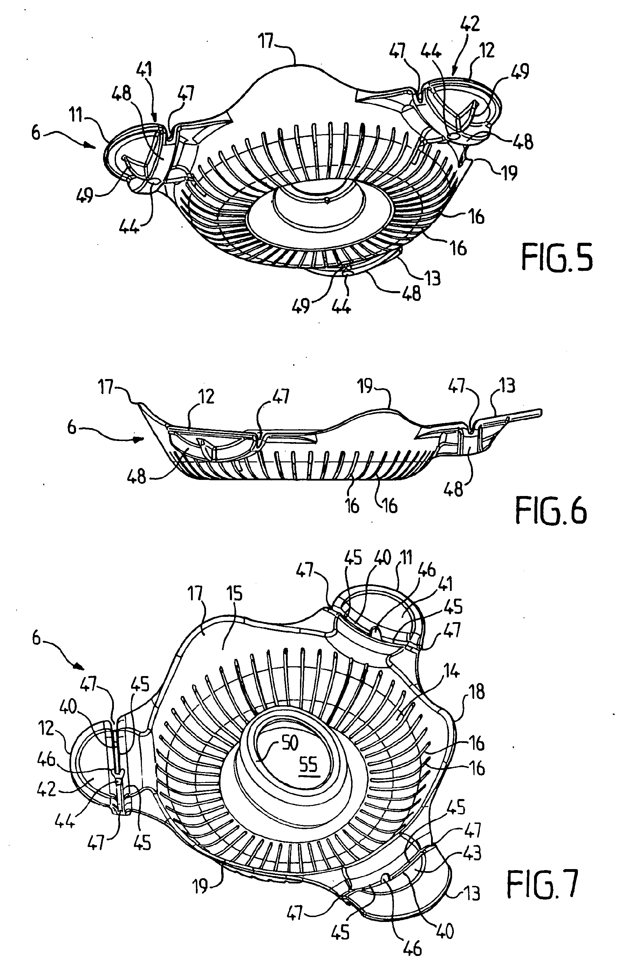

Les zones de réception 41, 42, 43 sont agencées en périphérie du réceptacle 10. Plus particulièrement les rainures 40 s'étendent transversalement sur les bras 11, 12, 13. Les zones de réception 41, 42, 43 sont également ménagées sur les bras 11, 12, 13. Chaque rainure 40 est formée par une paroi ménageant une nervure transversale 48 sur une face opposée à la zone de réception 41, 42, 43 correspondante. Tel que mieux visible à la figure 5, les bras 11, 12, 13 présentent une nervure longitudinale 49 sur la face opposée à la zone de réception 41, 42, 43 correspondante.

Le réceptacle 10 présente une partie centrale 50 prévue pour reposer sur la cheminée 9 de l'élément de collecte de jus 2. Le réceptacle 10 présente une ouverture centrale 55 prévue pour le passage d'un axe d'entraînement du presse-fruits. La partie centrale 50 entoure l'ouverture centrale 55. La cheminée 9 et la partie centrale 50 présentent une forme non circulaire, pour orienter la position de l'élément de collecte de pulpe 6 sur l'élément de collecte de jus 2. Tel que visible à la figure 1, le bras 13 présentant la languette externe 54 est aligné avec la poignée 4.

Les bras 11, 12, 13 et le bord périphérique 15 ménagent des échancrures 51 , 52, 53 par rapport à l'élément de collecte de jus 2.

Le fonctionnement du presse-fruits illustré aux figures 1 à 7 est le suivant.

L'utilisateur place un fruit tel que par exemple une tomate sur l'une des zones de réception 41, 42, 43, l'élément de collecte de pulpe 6 étant disposé sur l'élément de collecte de jus 2. La zone d'attache du fruit avec la tige est de préférence orientée de manière radiale, de manière à ce que la zone d'attache soit au sommet de l'une des deux moitiés du fruit coupé. L'utilisateur coupe ensuite le fruit en deux, par exemple à l'aide d'un couteau. La rainure 40 permet la séparation du fruit en deux moitiés sans risque d'entailler la zone de réception. Les extrémités débouchantes 47 de la rainure 40 facilitent la découpe. La sortie d'écoulement 44 est agencée au dessus de l'élément de collecte de jus 2. La sortie d'écoulement 44 permet de recueillir le jus s'écoulant dans la rainure 40 et de le déverser dans l'élément de collecte de jus 2. Le jus s'écoulant du fruit peut également se déverser par les échancrures 51, 52, 53 dans l'élément de collecte de jus 2.

L'utilisateur peut ensuite poser l'un des demi-fruits sur le plan de travail, la face coupée étant orientée de préférence vers le haut, et placer l'autre demi-fruit sur le cône de pressage 7 ou dans le couvercle 8. L'utilisateur maintient ensuite le demi-fruit sur le cône de pressage 7 à l'aide du couvercle 8. Grâce à la souplesse de la paroi du dôme 21, l'utilisateur peut maintenir le demi-fruit, tout en contrôlant la pression exercée sur le demi-fruit. L'utilisateur évite le contact avec le demi-fruit lors de l'opération de pressage. Le dôme 21 permet de mieux répartir la pression exercée sur le demi-fruit, et ainsi d'éviter la déchirure de la peau du demi-fruit lors de l'opération de pressage. Le dôme 21 ménage de préférence un jeu compris entre 2 et 4 mm avec les conformations 31 du cône de pressage 7 lorsque le couvercle 8 coiffant le cône de pressage 7 vient en contact avec le réceptacle 10, ce qui permet d'éviter de trop solliciter mécaniquement la peau du demi-fruit.

La zone centrale 36 du cône de pressage 7 permet de loger la zone dure du demi-fruit présente au niveau de l'attache avec la tige. Dans les tomates, cette zone est de plus presque exempte de jus. La dépression 23 du couvercle 8 agencée au-dessus de la zone centrale 36 du cône de pressage 7 permet de centrer et de maintenir le demi-fruit. Les conformations 31, 32 et les dents 35 permettent d'extraire le jus et la pulpe du demi fruit. Notamment, les arêtes 37 permettent d'entailler la pulpe du demi-fruit.

Le jus extrait du demi-fruit s'écoule par les fentes 16 du tamis 14. La partie périphérique annulaire 22 peut venir en contact au moins partiellement avec le fond du réceptacle 10 lorsque le couvercle 8 coiffe le cône de pressage 7, ce qui permet d'extraire le jus encore présent dans la pulpe recueillie dans le réceptacle 10.

L'utilisateur peut verser par le bec verseur 5 le jus recueilli dans l'élément de collecte de jus 2. Le réceptacle 10 comportant un bord périphérique 14 présentant une partie surélevée 17 entre les bras 11, 12, la pulpe recueillie dans le réceptacle 10 est retenue lors du versement du contenu de l'élément de collecte de jus 2 par le bec verseur 5.

A titre de variante, la surface de pressage 30 présente au moins une conformation en relief. La ou les conformations en relief ne sont pas nécessairement formées par une ou des nervures radiales de section triangulaire.

A titre de variante, la surface de pressage 30 présente une partie supérieure comprenant au moins une dent s'élevant en périphérie d'une zone centrale. La ou les dents ne sont pas nécessairement issues de nervures ménagées sur la surface de pressage.

A titre de variante, le cône de pressage 7 peut comporter une ou plusieurs ailettes s'étendant au moins partiellement dans le réceptacle 10, pour augmenter l'extraction du jus à partir de la pulpe recueillie dans le réceptacle 10.

A titre de variante, l'élément de collecte de pulpe 6 peut s'étendre sur une partie plus importante de sa périphérie jusqu'au rebord supérieur de l'élément de collecte de jus 2, les bras 11, 12, 13 et les échancrures 51, 52, 53 étant alors supprimés partiellement voire totalement.

A titre de variante, l'élément de collecte de pulpe 6 ne comporte pas nécessairement un tamis. L'élément de collecte de pulpe peut notamment former un réceptacle prévu pour recueillir le jus issu de la découpe du fruit et/ou le jus issu du pressage du demi-fruit.

A titre de variante, le réceptacle 10 peut être solidaire du cône de pressage 7.

A titre de variante, le cône de pressage 7 n'est pas nécessairement entraîné en rotation. Le couvercle 8 peut être utilisé avec un presse-fruits manuel.

A titre de variante, la partie supérieure 34 du cône de pressage 7 peut former la zone de réception d'un support de découpe de fruit, cette zone de réception étant alors avantageusement traversée par une rainure. Cette rainure est de préférence inclinée vers une ou deux extrémités débouchantes.

La présente invention n'est nullement limitée à l'exemple de réalisation décrit et à ses variantes, mais englobe de nombreuses modifications dans le cadre des revendications.

## Revendications

1. Couvercle de presse-fruits, comportant une partie centrale (20) formant un dôme (21) et une partie périphérique annulaire (22) s'étendant autour de la base du dôme (21), le dôme (21) étant réalisé en matériau souple, **caractérisé en ce que** la partie périphérique annulaire (22) présente un bord annulaire (26) relevé.

2. Couvercle de presse-fruits selon la revendication 1, **caractérisé en ce que** le dôme (21) est réalisé en matériau transparent ou translucide.

3. Couvercle de presse-fruits selon l'une des revendications 1 ou 2, **caractérisé en ce que** le dôme (21) présente une forme sensiblement hémisphérique.

4. Couvercle de presse-fruits selon l'une des revendications 1 à 3, **caractérisé en ce qu'**une dépression (23) est formée au sommet du dôme (21).

5. Couvercle de presse-fruits selon l'une des revendications 1 à 4, **caractérisé en ce que** la face extérieure du dôme (21) présente des conformations en relief (24, 25).

6. Couvercle de presse-fruits selon l'une des revendications 1 à 5, **caractérisé en ce que** la partie périphérique annulaire (22) est réalisée en matériau transparent ou translucide.

7. Couvercle de presse-fruits selon l'une des revendications 1 à 6, **caractérisé en ce que** la partie périphérique annulaire (22) est plus rigide que la partie centrale (20).

8. Presse-fruits comportant un cône de pressage (7) agencé au-dessus d'un réceptacle (10), et un couvercle (8) selon l'une des revendications 1 à 7, le cône de pressage (7) comportant une surface de pressage (30), **caractérisé en ce que** le dôme (21) peut être déformé latéralement de manière élastique en deux points opposés jusqu'à atteindre la surface de pressage (30) du cône de pressage (7) lorsque le couvercle (8) coiffe le cône de pressage (7).

9. Presse-fruits selon la revendication 8, **caractérisé en ce que** la partie périphérique annulaire (22) du couvercle (8) vient en contact au moins partiellement avec le fond du réceptacle (10) lorsque le couvercle (8) coiffe le cône de pressage (7).

10. Presse-fruits selon l'une des revendications 8 ou 9, **caractérisé en ce que** le réceptacle (10) présente un bord périphérique (15) relevé.

11. Presse-fruits selon l'une des revendications 8 à 10 **caractérisé en ce que** la surface de pressage (30) présente des conformations (31, 32) en relief et **en ce que** le dôme (21) ménage un jeu compris entre 2 et 4 mm avec les conformations (31, 32) lorsque le couvercle (8) coiffant le cône de pressage (7) vient en contact au moins partiellement avec le réceptacle (10).

12. Presse-fruits selon l'une des revendications 8 à 11, **caractérisé en ce que** le réceptacle (10) forme un tamis (14).

13. Presse-fruits selon l'une des revendications 8 à 12, **caractérisé en ce que** le cône de pressage (7) comporte une partie supérieure (34) comprenant au moins une dent (35) s'élevant en périphérie d'une zone centrale (36) prolongée par une paroi latérale de la surface de pressage (30), et **en ce qu'**une dépression (23) est formée au sommet du dôme (21).

14. Presse-fruits selon la revendication 13, **caractérisé en ce que** la partie supérieure (34) de la surface de pressage (30) comprend plusieurs dents (35) s'élevant en périphérie de la zone centrale (36).

15. Presse-fruits selon la revendication 14, **caractérisé en ce qu'**un espace (38) est ménagé entre deux dents (35) adjacentes.

16. Presse-fruits selon l'une des revendications 8 à 15, **caractérisé en ce qu'**il comporte un moteur entraînant en rotation le cône de pressage (7).
